# EUROPÄISCHE PATENTANMELDUNG

(11) **EP 2 058 765 A1**
(43) Veröffentlichungstag der Anmeldung: **13.05.2009**
(21) Anmeldenummer: 07021626.2
(22) Anmeldetag: 07.11.2007
(51) Int. Cl.: G06T 15/20, G06T 17/50

(54) **Verfahren und Vorrichtung zum Texturieren eines Objektes eines virtuellen dreidimensionalen geometrischen Modells**

(71) Anmelder: 3D Geo GmbH, 14482 Potsdam (DE)
(72) Erfinder: Döllner, Jürgen, 10117 Berlin (DE)
(74) Vertreter: Dendorfer, Claus

(57) **Zusammenfassung**

Die Erfindung betrifft ein Verfahren zum Texturieren eines Objektes eines virtuellen dreidimensionalen geometrischen Modells, welches mittels dreidimensionaler geometrischer Modelldaten, die dem Objekt zugeordnete dreidimensionale Objektdaten umfassen, repräsentiert wird, wobei bei dem Verfahren in einem Computersystem die folgenden Schritte ausgeführt werden: Erzeugen von Facettendaten aus den dreidimensionalen geometrischen Modelldaten, die Objektoberflächen des Objektes repräsentieren und den 3D-Objektdaten zugeordnet werden, Erzeugen von Texturdaten, die für die Objektoberflächen des Objektes eine jeweilige Oberflächentextur repräsentieren und den Facettendaten zugeordnet werden, und Bereitstellen der dreidimensionale Objektdaten, der Facettendaten und der Texturdaten für eine texturierte dreidimensionale Darstellung des Objektes. Das Erzeugen der Texturdaten umfasst die folgenden Schritte: Diskretisieren der Objektoberflächen, indem zu den Objektoberflächen zugehörige Oberflächenfragmente gebildet werden, Erzeugen eines jeweiligen Fragmentfarbwertes für die Oberflächenfragmente, indem die Oberflächenfragmente in eine jeweilige Projektionsfläche eines dem virtuellen dreidimensionalen geometrischen Modell zugeordneten, räumlich verorteten Bilddatensatzes, welcher eine oder mehrere Bildaufnahmen mit dem Objekt repräsentiert, projiziert werden und aus einer Farbinformation für die jeweilige Projektionsfläche der Fragmentfarbwert abgeleitet wird, und Bilden der Texturdaten mit den Oberflächenfragmenten der Objektoberflächen zugeordneten Fragmentfarbwerten. Weiterhin sind eine Vorrichtung zum Texturieren eines Objekts eines virtuellen dreidimensionalen geometrischen Modells und ein Computerprogrammprodukt vorgesehen.

## Beschreibung

Die Erfindung betrifft Verfahren und eine Vorrichtung zum Texturieren eines Objektes eines virtuellen dreidimensionalen geometrischen Modells sowie ein Computerprogrammprodukt.

### Hintergrund der Erfindung

Solche Techniken dienen dazu, für virtuelle dreidimensionale geometrische Modelle, welche ihrerseits mittels zugehöriger dreidimensionaler geometrischer Modelldaten repräsentiert werden, für eine Bildwiedergabe des Modells mit einer Textur zu versehen. Zu diesem Zweck werden Texturdaten aus räumlich verorteten digitalen Bilddaten erzeugt und den dreidimensionalen geometrischen Modelldaten zugeordnet.

Texturierung ist neben dem dreiecksbasierten Rendering eine fundamentale computergrafische Operationen (vgl. Haeberli et al.: "Texture Mapping as a Fundamental Drawing Primitive", in Fourth Eurographics Workshop on Rendering, Paris, France, 1993, pp. 259-266). Texturdaten werden im allgemeinen als 2- oder 3-dimensionale Raster- oder Volumendaten repräsentiert. Für computergrafische Modelle, die texturiert werden, müssen Texturkoordinaten zur Verfügung stehen, die entweder explizit als Teil einer Modellbeschreibung (Texturkoordinaten pro Eckpunkt eines geometrischen Modells), implizit aus der Modellgeometrie, zum Beispiel zweidimensionale Oberflächenparametrisierung, oder prozedural definiert sind, beispielsweise bei projektiven Texturen (vgl. Akenine-Möller et al.: "Real-Time Rendering", AK Peters, 2002). Die bei der Texturierung verarbeiteten Texturdaten sind entweder synthetischer oder photographischer Natur. Es können auch Daten verschiedener Herkunft kombiniert werden. Räumlich verortete Bilddaten, wie sie zum Beispiel bei der Luftbilderfassung entstehen, können mit Hilfe manuellen oder semiautomatischen Ausschneiden von Bildbereichen und anschließender perspektivischer und geometrischer Entzerrung für die Texturierung aufbereitet werden.

### Zusammenfassung der Erfindung

Aufgabe der Erfindung ist es, ein Verfahren und eine Vorrichtung zum Texturieren eines Objektes eines virtuellen dreidimensionalen geometrischen Modells unter Verwendung räumlich verorteter Bilddaten zu schaffen, mit denen das Texturieren von dreidimensionalen geometrischen Modellen auf effiziente Art und Weise ermöglicht ist, insbesondere zeiteffizient und mit vermindertem Aufwand für die Datenprozessierung.

Diese Aufgabe wird erfindungsgemäß durch ein Verfahren zum Texturieren eines Objektes eines virtuellen dreidimensionalen geometrischen Modells nach dem unabhängigen Anspruch 1 und eine Vorrichtung zum Texturieren eines Objektes eines virtuellen dreidimensionalen geometrischen Modells nach dem unabhängigen Anspruch 9 gelöst. Weiterhin ein Computerprgramprodukt nach dem unabhängigen Anspruch 10 geschaffen. Vorteilhafte Ausgestaltungen der Erfindung sind Gegenstand von abhängigen Unteransprüchen.

Die Erfindung umfasst den Gedanken eines Verfahrens zum Texturieren eines Objektes eines virtuellen dreidimensionalen geometrischen Modells, welches mittels dreidimensionaler geometrischer Modelldaten, die dem Objekt zugeordnete dreidimensionale Objektdaten umfassen, repräsentiert wird, wobei bei dem Verfahren in einem Computersystem die folgenden Schritte ausgeführt werden:
a1. Erzeugen von Facettendaten aus den dreidimensionalen geometrischen Modelldaten, die Objektoberflächen des Objektes repräsentieren und den dreidimensionalen Objektdaten zugeordnet werden,
b1. Erzeugen von Texturdaten, die für die Objektoberflächen des Objektes eine jeweilige Oberflächentextur repräsentieren und den Facettendaten zugeordnet werden, und
c1. Bereitstellen der dreidimensionale Objektdaten, der Facettendaten und Texturdaten für eine texturierte dreidimensionale Darstellung des Objektes,
wobei das Erzeugen der Texturdaten weiterhin die folgenden Schritte umfasst: Diskretisieren der Objektoberflächen, indem zu den Objektoberflächen zugehörige Oberflächenfragmente gebildet werden, Erzeugen eines jeweiligen Fragmentfarbwertes für die Oberflächenfragmente, indem die Oberflächenfragmente in eine jeweilige Projektionsfläche eines dem virtuellen dreidimensionalen geometrischen Modell zugeordneten, räumlich verorteten Bilddatensatzes, welcher eine oder mehrere Bildaufnahmen mit dem Objekt repräsentiert, projiziert werden und aus einer Farbinformation für die jeweilige Projektionsfläche der Fragmentfarbwert abgeleitet wird, und Bilden der Texturdaten mit den Oberflächenfragmenten der Objektoberflächen zugeordneten Fragmentfarbwerten.

Weiterhin umfasst die Erfindung den Gedanken einer Vorrichtung zum Texturieren eines Objektes eines virtuellen dreidimensionalen geometrischen Modells, welches mittels dreidimensionaler geometrischer Modelldaten, die dem Objekt zugeordnete dreidimensionale Objektdaten umfassen, repräsentiert ist, mit einem Computersystem, welches die folgenden Merkmale aufweist:
a2. eine Facettendaten-Erzeugungseinrichtung, die konfiguriert ist, Facettendaten aus den dreidimensionalen geometrischen Modelldaten zu erzeugen, die Objektoberflächen des Objektes repräsentieren und den dreidimensionalen Objektdaten zugeordnet werden,
b2. eine Texturdaten-Erzeugungseinrichtung, die konfiguriert ist, Texturdaten zu erzeugen, die für die Objektoberflächen des Objektes eine jeweilige Oberflächentextur repräsentieren und den Facettendaten zugeordnet werden, und
c2. eine Ausgabeeinrichtung, die konfiguriert ist, die dreidimensionalen Objektdaten, die Facettendaten und der Texturdaten für eine texturierte dreidimensionale Darstellung des Objektes bereitzustellen,
wobei die Texturdaten-Erzeugungseinrichtung weiterhin konfiguriert ist, die Objektoberflächen zu diskretisieren, indem zu den Objektoberflächen zugehörige Oberflächenfragmente gebildet werden, einen jeweiligen Fragmentfarbwert für die Oberflächenfragmente zu erzeugen, indem die Oberflächenfragmente in eine jeweilige Projektionsfläche eines dem virtuellen dreidimensionalen geometrischen Modell zugeordneten, räumlich verorteten Bilddatensatzes, welcher eine oder mehrere Bildaufnahmen mit dem Objekt repräsentiert, projiziert werden und aus einer Farbinformation für die jeweilige Projektionsfläche der Fragmentfarbwert abgeleitet wird, und die Texturdaten mit den Oberflächenfragmenten der Objektoberflächen zugeordneten Fragmentfarbwerten zu bilden.

Eine bevorzugte Weiterbildung der Erfindung sieht vor, dass das Erzeugen der Texturdaten weiterhin einen Schritt zum Auffinden der Objektoberflächen in der einen oder allen Bildaufnahmen mit dem Objekt umfasst.

Bei einer zweckmäßigen Ausgestaltung der Erfindung kann vorgesehen sein, dass das Auffinden der Objektoberflächen in dem Bilddatensatz weiterhin einen Schritt zum Prüfen einer Okklusion der Objektoberflächen in der einen oder allen Bildaufnahmen mit dem Objekt umfasst.

Eine vorteilhafte Ausführungsform der Erfindung sieht vor, dass das Erzeugen der Texturdaten weiterhin einen Schritt zum Erfassen einer jeweiligen Projektionscharakteristik für die Objektoberflächen umfasst, bei dem ein Sichtwinkel zwischen einer Ebene einer betrachteten Bildaufnahme aus dem zugeordneten Bilddatensatz und einer Ebene der jeweiligen Objektoberfläche bestimmt wird, und dass die Texturdaten den jeweiligen Sichtwinkel für die Objektoberflächen umfassend gebildet werden.

Bevorzugt sieht eine Fortbildung der Erfindung vor, dass für eine oder alle Objektoberflächen ein minimaler Sichtwinkel bestimmt wird, indem der Sichtwinkel für eine oder alle Objektoberflächen für mehrere betrachtete Bildaufnahmen mit dem Objekt ermittelt wird.

Bei einer vorteilhaften Ausgestaltung der Erfindung kann vorgesehen sein, dass der Fragmentfarbwert als ein Fragmentfarbmittelwert bestimmt wird, indem Farbwerte für mehrere Bildpunkte innerhalb der Projektionsfläche gemittelt werden. Die Mittelung kann gewichtet oder ungewichtet ausgeführt werden.

Eine Weiterbildung der Erfindung kann vorsehen, dass das Erzeugen von Facettendaten weiterhin einen Schritt zum räumlich kohärenten Ordnen der Objektoberflächen umfasst, indem die Facettendaten einer räumlichen Verteilung entsprechend sortiert und gruppiert werden.

Eine bevorzugte Weiterbildung der Erfindung sieht vor, dass das Bereitstellen gemäß Schritt c1. weiterhin einen Schritt zum Umwandeln der Texturdaten in eine Standardbildformat umfasst.

Bei einer zweckmäßigen Ausgestaltung der Erfindung kann vorgesehen sein, dass die mehreren Anzeigeelemente mit einer jeweils zugeordneten Treiberschaltung verbunden sind, welche einen mit dem Anzeigeelement in Reihe geschalteten Treibertransistor aufweist.

### Beschreibung bevorzugter Ausruhrungsbeispiele der Erfindung

Die Erfindung wird im Folgenden anhand von bevorzugten Ausführungsbeispielen unter Bezugnahme auf Figuren einer Zeichnung näher erläutert. Hierbei zeigen:
- Fig. 1: eine schematische Darstellung einer Vorrichtung zum Texturieren eines Objektes eines virtuellen dreidimensionalen geometrischen Modells,
- Fig. 2: eine schematische Darstellung zur Erläuterung eines Verfahrens zum Texturieren eines Objektes eines virtuellen dreidimensionalen geometrischen Modells,
- Fig. 3: ein Ablaufdiagramm zur Erläuterung des Verfahrens und zum Texturieren eines Objektes eines virtuellen dreidimensionalen geometrischen Modells und
- Fig. 4: ein Ablaufdiagramm zur Erläuterung eines Prozesses zum Erzeugen von Texturdaten

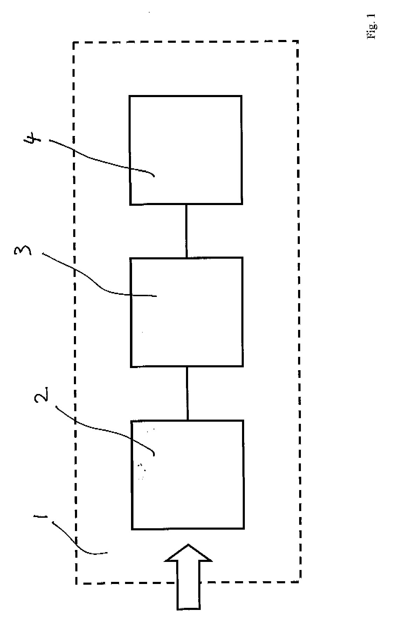

Fig. 1 zeigt eine schematische Darstellung einer Vorrichtung zum Texturieren eines oder mehrerer Objekte eines virtuellen dreidimensionalen geometrischen Modells auf der Grundlage räumlich verorteter Bilddaten. Hierbei ist in einem mittels geeigneter Hard- und Software gebildeten Computersystem 1, beispielsweise eines Personalcomputers, eine Facettendaten-Erzeugungseinrichtung 2 gebildet, die konfiguriert ist, Facettendaten aus deidimensionalen geometrischen Modelldaten zu erzeugen. Die Facettendaten werden dann in einer Texturdaten-Erzeugungseinrichtung 3 genutzt, um Texturdaten zu erzeugen. Die Facettendaten und die Texturdaten werden dann für eine texturierte dreidimensionale Darstellung mit Hilfe einer Ausgabeeinrichtung 4 bereitgestellt, beispielsweise für eine Speicherung und / oder eine Ausgabe an eine Anzeigeeinrichtung.

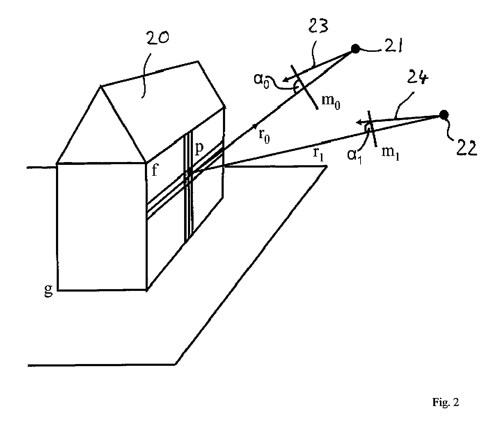

Im Folgenden wird unter Bezugnahme auf die Fig. 2 bis 4 ein Verfahren zum Texturieren eines virtuellen dreidimensionalen geometrischen Modells auf der Grundlage räumlich verorteter Bilddaten unter Verwendung der Vorrichtung aus Fig. 1 im Detail beschrieben.

Fig. 2 zeigt eine schematische Darstellung zur Erläuterung eines Verfahrens zum Texturieren eines Objektes eines virtuellen dreidimensionalen geometrischen Modells auf der Grundlage räumlich verorteter Bilddaten. Dargestellt ist ein 3D-Objekt 20 mit Facetten *f*, die in Fragmente *p* diskretisiert werden können. Für zu dem 3D-Objekt 20 gehörige Bildaufnahmen *m₀* und *m₁* sind ein Projektionszentrum 21, 22 und eine Projektionsrichtung 23, 24 gezeigt.

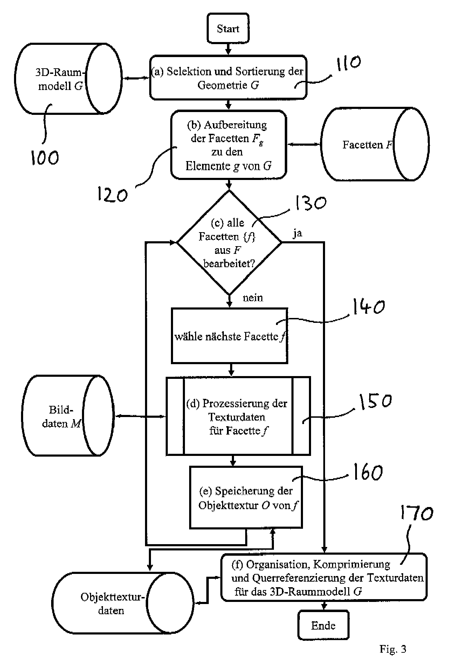

Gemäß Fig. 3 werden in einem Schritt 100 Modelldaten für ein dreidimensionales geometrisches Modell, für eine Anordnung mit einem oder mehreren Objekten bereitgestellt, welches auch als 3D-Modell bezeichnet wird, zum Beispiel ein 3D-Gebäudemodell oder ein 3D-Infrastrukturmodell virtueller 3D-Raummodelle.

Weiterhin steht eine Menge von Bilddaten *M*=*{m}* zur Verfügung, die in digitalisierter Form räumlich verortete Bildaufnahmen *m* für die gesamte Anordnung mit dem einen oder den mehreren Objekten oder wenigstens Teile hiervon repräsentieren. Solche Bildaufnahmen werden für Stadtbereiche oder Landschaften beispielsweise aus dem Flugzeug als Schrägbilder aufgenommen. Es existieren heute umfangreiche Sammlungen derartiger Bildaufnahmen in digitalisierter Form in Datenbank. Für die Menge von Bilddaten *M*, d.h. die hiermit repräsentierten Bildaufnahmen sind zur räumlichen Verortung jeweils ein Projektionszentrum mit Raumkoordinaten und eine Projektionsrichtung bekannt. Die Bildauflösung, -ausdehnung und -kanäle sowie die zur Erfassung der Bildaufnahmen verwendeten Techniken können beliebig gewählt werden. Die Modelldaten für das dreidimensionale geometrische Modell sind zum Beispiel gegeben durch eine computergrafische Szenenrepräsentation, zum Beispiel kodiert in den Formaten Collada, VRML, X3D, CityGML oder dergleichen.

Gemäß Fig. 3 wird aus den Modelldaten eine Menge von 3D-Geometrieobjekten *G* = *{g}* in einem Schritt 110 ausgewählt. Die Auswahl kann zum Beispiel anhand eines Objekttyps erfolgen. Beispielsweise können alle 3D-Gebäudemodelle eines virtuellen 3D-Stadtmodells eines bestimmten Bezirks selektiert werden. Die Reihenfolge, in der die ausgewählten 3D-Geometrien *G* bearbeitet werden, kann beliebig gewählt sein. Beispielsweise können alle selektierten 3D-Gebäudemodelle nach Straßen und Hausnummern sortiert werden.

In einem Schritt 120 werden dann gemäß Fig. 3 für alle 3D-Geometrieobjekte g Objektoberflächen, genannt Facetten *F_{g}*, aufbereitet. Die Aufbereitung beinhaltet die Extraktion von Polygonen aus den 3D-Geometrieobjekten *g* sowie eine eindeutige Kennzeichnung der einzelnen Facetten mittels Referenzierung auf das jeweils zugeordnete 3D-Geometrieobjekt. Beispielsweise können in der Aufbereitung alle Außenwandmodelle eines 3D-Gebäudemodells in Form von Polygonen extrahiert werden. Die aufbereiteten Facetten *F* zu den 3D-Geometrieobjekten *G* bilden relevante Objektoberflächen des 3D-Modells, für die anschließend Objekttexturen generiert werden, was unten näher erläutert wird. Die für das Verfahren genutzten Facetten können aus den im 3D-Geometrieobjekt enthaltenen Polygonen oder Freiformflächen direkt gewonnen werden, beispielsweise mittels rekursiver Zerlegung vorhandener Polygone bis alle Polygone eine vorgegebene maximale Fläche unterschreiten. Zuvor kann ein 3D-Geometrieobjekt vereinfacht werden, zum Beispiels mittels Entfernen nachrangiger und kleinteiliger Geometrien.

Es wird dann in Schritten 130 bis 160 für die Facetten *F* eine Menge von Objekttexturen *T* = *{t}* aus den Bilddaten *M* generiert. Die Reihenfolge bei der Prozessierung der Facetten kann beliebig gewählt sein. Zur Optimierung des Zugriffs auf die Bilddaten werden die Facetten räumlich kohärent geordnet. Hierzu werden die Facetten anhand ihrer Raumposition geordnet, so dass räumlich nahestehenden Facetten sich bezüglich der Ordnung in der Nähe befinden.

Wenn für alle Facetten zugehörige Texturdaten erzeugt wurden, werden in einem Schritt 170 gemäß Fig. 3 für die 3D-Geometrieobjekte *G* insgesamt berechneten Objekttexturen *T* = *{t}* als Texturdaten zusammen mit den Referenzen auf die Facetten *F* und die 3D-Geometrieobjekte *G* abgespeichert. Hierzu werden die Texturdaten *T* in Standardbildformate umgewandelt, optional komprimiert und optional in Textur-Atlanten organisiert. Zugleich werden die Modelldaten für das 3D-Modell in Form von *G* durch die Referenzen auf die Objekttexturen *T* erweitert.

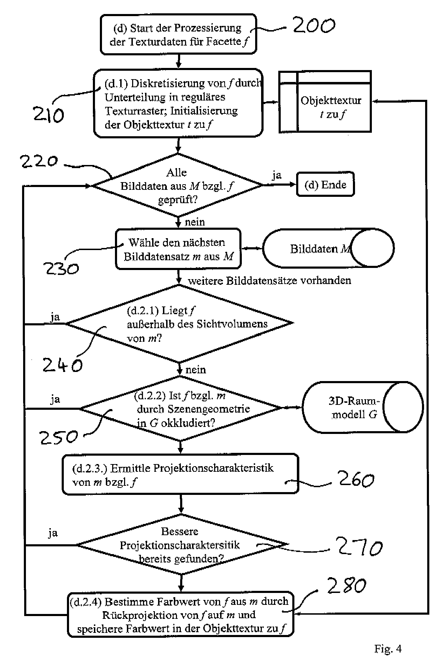

In Folgenden wird unter Bezugnahme auf Fig. 4 der Prozess der Erzeugung der Objekttexturen *T* näher erläutert.

Für jede Facette *f* aus der Menge der Facetten *F*=*{f}* wird eine zugehörige Oberflächentextur *t* aus den Bilddaten *M* berechnet. Nach dem Beginn der Prozessierung im Schritt 200 wird für eine ausgewählte Facette *f* eine Diskretisierung ihrer Oberfläche in einem Schritt 210 vorgenommen. Hierbei wird eine Unterteilung in Form eines regulären Rasters vorgenommen, dessen Elemente eine Menge von Fragmenten *P* = *{p}* der zugehörigen Textur *t* bilden. Eine Granularität der Unterteilung kann grundsätzlich beliebig gewählt werden. Die Granularität bestimmt die räumliche Auflösung der dann generierten Objekttexturen und hängt im allgemeinen vom Anwendungszweck ab. Die Diskretisierung wird stets in Bezug auf eine Objektraum-Metrik vorgenommen, d.h. bezüglich einer Objektgröße im virtuellen 3D-Modell bestimmt, um für die Gesamtheit der Objekttexturen des 3D-Modells eine einheitliche Auflösung zu erzielen. Beispielsweise kann für eine Fassade eines 3D-Gebäudemodells ein Gitter einer Auflösung von 25 cm x 25 cm, wobei sich das Maß "cm" auf die Größe der Fassaden im virtuellen 3D-Modell bezieht, gewählt werden. Die Gitterzellen entsprechen im Ergebnis technisch Texturelementen (Texel) der zur ausgewählten Facette *f* gehörenden Objekttextur *t*.

In Schritten 220 bis 280 werden alle Fragmente *{p}* einer Facette *f* nacheinander abgearbeitet. Die Reihenfolge der Fragmente kann beliebig gewählt werden, zum Beispiel kann spaltenund reihenweise bezüglich des Rasters der Fragmente erfolgen. Bei der Bearbeitung wird ein Fragment *p* zunächst initialisiert (mit einem "*no-data value* "). Dann werden nacheinander alle Bildaufnahmen *{m}* geprüft, wie nachfolgend näher erläutert wird.

Im Schritt 240 wird für das gerade bearbeite Fragment geprüft, ob es im Sichtvolumen einer aktuellen Bildaufnahme enthalten ist. Liegt das Fragment *f* nicht im Sichtvolumen der aktuellen Bildaufnahme *m*, wird zur nächsten Bildaufnahme übergegangen. Wenn doch, wird mit Schritt 250 fortgefahren.

Im Schritt 250 wird für das gerade bearbeite Fragment eine mögliche Verdeckung durch Szenengeometrien geprüft (Okklusionstest). Liegt zwischen dem Fragment *f* und dem Projektszentrum des untersuchten Bilddatensatzes ein weiteres 3D-Geometrieobjekt, ist das Fragment verdeckt durch dieses 3D-Geometrieobjekt, und es wird zur nächsten Bildaufnahme übergegangen. Ansonsten wird mit Schritt 260 fortgefahren.

Im Schritt 260 wird eine Projektionscharakteristik von *m* bezüglich des gerade bearbeiteten Fragmentes *f* ermittelt. Hierzu wird für das ausgewählte Fragment *f* ein Sichtwinkel *a* zwischen einer Ebene der Bildaufnahme und einer Ebene der Facette bestimmt, zu welcher das Fragment gehört. Falls der Sichtwinkel *a*, der zwischen 0° und 90° liegen kann, größer ist als ein Sichtwinkel für das ausgewählte Fragment bei einer anderen, zuvor untersuchten Bildaufnahme ist, d.h. die aktuell betrachtete Bildaufnahme einen besseren Winkel aufweist, dann wird zum ausgewählten Fragment ein Farbwert aus der aktuell betrachteten Bildaufnahme bestimmt. Dann wird zum Bilddatensatz *M*=*{m}* für das ausgewählte Fragment *p* ein Farbwert *p.c* bestimmt. Dazu wird das Fragment auf den Bilddatensatz *M*=*{m}* rückprojiziert. Anschließend wird innerhalb eine Fläche im Bilddatensatz, die sich durch die Rückprojektion ergibt, ein hiervon überdeckter Bereich abgetastet (mittels "*texture sampling"*) und der Farbwert *p.c* als Farbmittelwert der abgetasteten Werte berechnet. Der Farbmittelwert und der Winkel *a* der betrachteten Bildaufnahme werden gespeichert.

Im Schritt 280 wird die synthetisierte Objekttextur *t* als Bildrasterdatensatz gespeichert. Diese Datei repräsentiert die Objekttextur zur Facette *f* der 3D-Geometrie *g*.

Das beschriebene Verfahren kann beispielsweise mittels des folgenden Programmablaufs ausgeführt werde:
Für alle Geometrien *g* aus *G* {
für alle Facetten *f* von *g* {
unterteile *f* in Fragmente *{p}*
initialisiere zugehörige Textur *t*
für alle Fragmente *p* von *f* {
*p.c* = no-data
*a-max* = no-angle
für alle *m* aus *M* {
ray r := ray(p, projektionszentrum(m))
if( r schneidet nicht Sichtvolumen von m) discard m;
if( r schneidet andere Geometrie als g) discard m;
bestimme Sichtwinkel a := winkel(ebene(m), ebene(p))
if(a <= a-max) discard m;
p.c <-- textursampling(r, p, m)
a-max <-- a
}
speichere p.c in t
}
speichere t als Bilddatei zu f von g
}
}

Das beschriebene Verfahren weist gegenüber dem Stand der Technik allgemein, d.h. nicht nur in der vorangehend erläuterten Ausführungsform, weitgehende Vorteile auf. Es arbeitet in seinen verschiedenen Ausgestaltungen zunächst mit einer beliebig räumlich verteilten Menge von räumlich verorteten Bilddatensätzen, d.h. es kann in die Berechnung sämtliche Bildaufnahmen einbeziehen, die räumlich verortet sind. Das Verfahren setzt insbesondere nicht voraus, dass die Bilddatensätze räumlich gleichverteilt oder in einer Projektionsrichtung besonders angeordnet sind.

Ein weitere Vorteil ist, dass das Verfahren mit hybriden Eingabe-Bilddaten arbeiten kann. Es können beispielsweise Luftbilddaten, Satellitenbilddaten und Bodenbilddaten kombiniert ausgewertet werden. Das Verfahren kann so heterogene Bilddaten zur Ermittlung der optimalen Objekttexturen nutzen.

Darüber hinaus bietet das erläuterte Verfahren in einer im Gegensatz zu bekannten Verfahren der Texturdatengenerierung, insbesondere denen aus dem Bereich der Photogrammetrie, Vorteile, die dadurch entstehen, dass es in umgekehrter Richtung arbeitet: Statt eine einzige beste Bildaufnahme für eine gegebene Facette zu bestimmen und daraus eine Objekttextur auszuschneiden und perspektivisch-geometrisch zu entzerren, wird für jedes Fragment einer Facette stets einzeln aus der Gesamtheit aller räumlich verorteten Bilddaten der optimale Bilddatensatz gesucht und die darin enthaltene Farbinformation mittels Textur-Sampling dem Fragment zugewiesen.

Als weiteren Vorteil können bei dem Verfahren bei der Generierung der Objekttexturen verdeckende 3D-Geometrien berücksichtigt werden, d.h. die Verdeckung wird feingranular für jedes Fragment einer generierten Objekttextur geprüft. Die in Bezug auf einen einzelnen Bilddatensatz verdeckten Bereiche einer Facetten können damit gezielt erkannt und durch Informationen anderer Bilddatensätze befüllt werden.

Schließlich kann das Verfahren nicht nur für planare und nicht nur für rechtwinklige Facetten eingesetzt werden, sondern generell für jede Facette, die über eine mathematisch wohl definierte Oberfläche, mindestens jedoch an jedem Fragment über eine Oberflächennormale verfügen. Damit ist das Verfahren hinsichtlich der Objektgeometrien universell.

Die in der vorstehenden Beschreibung, den Ansprüchen und der Zeichnung offenbarten Merkmale der Erfindung können sowohl einzeln als auch in beliebiger Kombination für die Verwirklichung der Erfindung in ihren verschiedenen Ausführungsformen von Bedeutung sein.

## Patentansprüche

1. Verfahren zum Texturieren eines Objektes eines virtuellen dreidimensionalen geometrischen Modells, welches mittels dreidimensionaler geometrischer Modelldaten, die dem Objekt zugeordnete dreidimensionale Objektdaten umfassen, repräsentiert wird, wobei bei dem Verfahren in einem Computersystem die folgenden Schritte ausgeführt werden:
a1. Erzeugen von Facettendaten aus den dreidimensionalen geometrischen Modelldaten, die Objektoberflächen des Objektes repräsentieren und den 3D-Objektdaten zugeordnet werden,
b1. Erzeugen von Texturdaten, die für die Objektoberflächen des Objektes eine jeweilige Oberflächentextur repräsentieren und den Facettendaten zugeordnet werden, und
c1. Bereitstellen der dreidimensionale Objektdaten, der Facettendaten und der Texturdaten für eine texturierte dreidimensionale Darstellung des Objektes,
wobei das Erzeugen der Texturdaten die folgenden Schritte umfasst:
- Diskretisieren der Objektoberflächen, indem zu den Objektoberflächen zugehörige Oberflächenfragmente gebildet werden,
- Erzeugen eines jeweiligen Fragmentfarbwertes für die Oberflächenfragmente, indem die Oberflächenfragmente in eine jeweilige Projektionsfläche eines dem virtuellen dreidimensionalen geometrischen Modell zugeordneten, räumlich verorteten Bilddatensatzes, welcher eine oder mehrere Bildaufnahmen mit dem Objekt repräsentiert, projiziert werden und aus einer Farbinformation für die jeweilige Projektionsfläche der Fragmentfarbwert abgeleitet wird, und
- Bilden der Texturdaten mit den Oberflächenfragmenten der Objektoberflächen zugeordneten Fragmentfarbwerten.

2. Verfahren nach Anspruch 1, **dadurch gekennzeichnet, dass** das Erzeugen der Texturdaten weiterhin einen Schritt zum Auffinden der Objektoberflächen in dem räumlich verorteten Bilddatensatz umfasst.

3. Verfahren nach Anspruch 2, **dadurch gekennzeichnet, dass** das Auffinden der Objektoberflächen in dem Bilddatensatz weiterhin einen Schritt zum Prüfen einer Verdekkung der Objektoberflächen in dem räumlich verorteten Bilddatensatz mit dem Objekt umfasst.

4. Verfahren nach mindestens einem der vorangehenden Ansprüche, **dadurch gekennzeichnet, dass** das Erzeugen der Texturdaten weiterhin einen Schritt zum Erfassen einer jeweiligen Projektionscharakteristik für die Objektoberflächen umfasst, bei dem ein Sichtwinkel zwischen einer Ebene einer betrachteten Bildaufnahme aus dem zugeordneten, räumlich verorteten Bilddatensatz und einer Ebene der jeweiligen Objektoberfläche bestimmt wird, und dass die Texturdaten den jeweiligen Sichtwinkel für die Objektoberflächen umfassend gebildet werden.

5. Verfahren nach Anspruch 4, **dadurch gekennzeichnet, dass** für eine oder alle Objektoberflächen ein minimaler Sichtwinkel bestimmt wird, indem der Sichtwinkel für eine oder alle Objektoberflächen für mehrere betrachtete Bildaufnahmen mit dem Objekt ermittelt wird.

6. Verfahren nach mindestens einem der vorangehenden Ansprüche, **dadurch gekennzeichnet, dass** der Fragmentfarbwert als ein Fragmentfarbmittelwert bestimmt wird, indem Farbwerte für mehrere Bildpunkte innerhalb der Projektionsfläche gemittelt werden.

7. Verfahren nach mindestens einem der vorangehenden Ansprüche, **dadurch gekennzeichnet, dass** das Erzeugen von Facettendaten weiterhin einen Schritt zum räumlich kohärenten Ordnen der Objektoberflächen umfasst.

8. Verfahren nach mindestens einem der vorangehenden Ansprüche, **dadurch gekennzeichnet, dass** das Bereitstellen gemäß Schritt c) weiterhin einen Schritt zum Umwandeln der Texturdaten in eine Standardbildformat umfasst.

9. Vorrichtung zum Texturieren eines Objektes eines virtuellen dreidimensionalen geometrischen Modells, welches mittels dreidimensionaler geometrischer Modelldaten, die dem Objekt zugeordnete dreidimensionale Objektdaten umfassen, repräsentiert ist, mit einem Computersystem, welches die folgenden Merkmale aufweist:
a2. eine Facettendaten-Erzeugungseinrichtung, die konfiguriert ist, Facettendaten aus den dreidimensionalen geometrischen Modelldaten zu erzeugen, die Objektoberflächen des Objektes repräsentieren und den 3D-Objektdaten zugeordnet werden,
b2. eine Texturdaten-Erzeugungseinrichtung, die konfiguriert ist, Texturdaten zu erzeugen, die für die Objektoberflächen des Objektes eine jeweilige Oberflächentextur repräsentieren und den Facettendaten zugeordnet werden, und
c2. eine Ausgabeeinrichtung, die konfiguriert ist, die dreidimensionalen Objektdaten, die Facettendaten und die Texturdaten für eine texturierte dreidimensionale Darstellung des Objektes bereitzustellen,
wobei die Texturdaten-Erzeugungseinrichtung konfiguriert ist:
- die Objektoberflächen zu diskretisieren, indem zu den Objektoberflächen zugehörige Oberflächenfragmente gebildet werden,
- einen jeweiligen Fragmentfarbwert für die Oberflächenfragmente zu erzeugen, indem die Oberflächenfragmente in eine jeweilige Projektionsfläche eines dem virtuellen dreidimensionalen geometrischen Modell zugeordneten, räumlich verorteten Bilddatensatzes, welcher eine oder mehrere Bildaufnahmen mit dem Objekt repräsentiert, projiziert werden und aus einer Farbinformation für die jeweilige Projektionsfläche der Fragmentfarbwert abgeleitet wird, und
- die Texturdaten mit den Oberflächenfragmenten der Objektoberflächen zugeordneten Fragmentfarbwerten zu bilden.

10. Computerprogrammprodukt zum Texturieren eines Objektes eines virtuellen dreidimensionalen geometrischen Modells, welches mittels dreidimensionaler geometrischer Modelldaten, die dem Objekt zugeordnete dreidimensionale Objektdaten umfassen, repräsentiert wird, wobei das Produkt die folgenden Mittel umfasst:
a1. auf einem elektronischen Speichermedium aufgezeichnete Mittel zum Erzeugen von Facettendaten aus den dreidimensionalen geometrischen Modelldaten, die Objektoberflächen des Objektes repräsentieren und den 3D-Objektdaten zugeordnet werden,
b1. auf dem elektronischen Speichermedium aufgezeichnete Mittel zum Erzeugen von Texturdaten, die für die Objektoberflächen des Objektes eine jeweilige Oberflächentextur repräsentieren und den Facettendaten zugeordnet werden, und
c1. auf dem elektronischen Speichermedium aufgezeichnete Mittel zum Bereitstellen der dreidimensionale Objektdaten, der Facettendaten und der Texturdaten für eine texturierte dreidimensionale Darstellung des Objektes,
wobei die auf dem elektronischen Speichermedium aufgezeichneten Mittel zum Erzeugen der Texturdaten weiterhin die folgenden Mittel umfassen:
- auf dem elektronischen Speichermedium aufgezeichnete Mittel zum Diskretisieren der Objektoberflächen, indem zu den Objektoberflächen zugehörige Oberflächenfragmente gebildet werden,
- auf dem elektronischen Speichermedium aufgezeichnete Mittel zum Erzeugen eines jeweiligen Fragmentfarbwertes für die Oberflächenfragmente, indem die Oberflächenfragmente in eine jeweilige Projektionsfläche eines dem virtuellen dreidimensionalen geometrischen Modell zugeordneten, räumlich verorteten Bilddatensatzes, welcher eine oder mehrere Bildaufnahmen mit dem Objekt repräsentiert, projiziert werden und aus einer Farbinformation für die jeweilige Projektionsfläche der Fragmentfarbwert abgeleitet wird, und
- auf dem elektronischen Speichermedium aufgezeichnete Mittel zum Bilden der Texturdaten mit den Oberflächenfragmenten der Objektoberflächen zugeordneten Fragmentfarbwerten.
